# EUROPEAN PATENT SPECIFICATION

(11) **EP 4 185 002 B1**
(45) Date of publication and mention of the grant of the patent: **23.09.2026**
(21) Application number: 21859895.1
(22) Date of filing: 06.07.2021
(51) Int. Cl.: H04W 24/02, H04W 48/18

(54) **NETWORK SLICING MANAGEMENT METHOD AND SYSTEM, AND COMPUTER READABLE STORAGE MEDIUM**
NETZWERK-SLICING-VERWALTUNGSVERFAHREN UND -SYSTEM SOWIE COMPUTERLESBARES SPEICHERMEDIUM
PROCÉDÉ ET SYSTÈME DE GESTION DE DÉCOUPAGE DE RÉSEAU, ET SUPPORT D'ENREGISTREMENT LISIBLE PAR ORDINATEUR

(30) Priority: 27.08.2020 CN 202010876590
(43) Date of publication of application: 24.05.2023
(73) Proprietor: ZTE Corporation, Shenzhen, Guangdong 518057 (CN)
(72) Inventor: XUE, Zitao, Shenzhen, Guangdong 518057 (CN)
(74) Representative: WBH Wachenhausen Patentanwälte PartG mbB
(86) International application number: PCT/CN2021/104789
(87) International publication number: WO 2022/042055

(56) References cited:
- CN-A- 111 356 207
- CN-A- 111 385 847
- CN-A- 111 416 730
- US-A1- 2019 357 130
- US-A1- 2020 045 586
- US-A1- 2020 045 586
- "3rd Generation Partnership Project; Technical Specification Group Services and System Aspects; Study on application layer support for Factories of the Future in 5G network; (Release 17)", 4 August 2020 (2020-08-04), XP051934719, Retrieved from the Internet <URL:https://ftp.3gpp.org/tsg_sa/WG6_MissionCritical/Latest_draft_SA6_Specs/archive/23745-090.zip 23745-090-rm.doc> [retrieved on 20200804]
- "3rd Generation Partnership Project; Technical Specification Group Services and System Aspects; Service Enabler Architecture Layer for Verticals (SEAL); Functional architecture and information flows; (Release 17)", no. V17.2.0, 25 June 2021 (2021-06-25), pages 1 - 165, XP052029805, Retrieved from the Internet <URL:https://ftp.3gpp.org/Specs/archive/23_series/23.434/23434-h20.zip 23434-h20.doc> [retrieved on 20210625]
- "3rd Generation Partnership Project; Technical Specification Group Services and System Aspects; Service Enabler Architecture Layer for Verticals (SEAL); Functional architecture and information flows; (Release 16)", no. V16.4.0, 6 July 2020 (2020-07-06), pages 1 - 120, XP051924153, Retrieved from the Internet <URL:ftp://ftp.3gpp.org/Specs/archive/23_series/23.434/23434-g40.zip 23434-g40.doc> [retrieved on 20200706]
- 3GPP: "3rd Generation Partnership Project; Technical Specification Group Services and System Aspects; Telecommunication management; Study on tenancy concept in 5G networks and network slicing management", 3GPP TR 28.804 V16.0.1, 30 October 2019 (2019-10-30), pages 1 - 14, XP051785388

## Description

### TECHNICAL FIELD

Embodiments of the present disclosure relate to, but not limited to, the technical field of network communication, and in particular to a network slice management method and system, and a computer-readable storage medium.

### BACKGROUND

As a basis for 5G applications, the 5G slicing technology is receiving more and more attention from all links in the industrial chain. The 5G slicing technology is a platform technology for the implementation of 5G applications, so it is easy to foresee that in the future, 5G slicing will become the most valued link in the 5G-related industrial chain as well as a focus of competition among various vendors.

In some cases, the network slicing function defined in the current 3rd Generation Partnership Project (3GPP) protocol system is based on the upgrade of a core network to 5G Core Network (5GC), with a UE Route Selection Policy (URSP) being issued to User Equipments (UEs) by a Policy Control Function (PCF) which is a network element of a control plane of the core network. Therefore, the 3GPP Non-Access Stratum (NAS) layer protocol is adopted as a management and update rule for its network slice rules, that is, all the network slice rules are based on the NAS layer protocol, which makes changes related to upgrade and maintenance complicated and inflexible.

The UE is divided into two aspects at software and hardware logic layers, i.e., an Application Process (AP) and a modem. Chip vendors generally open all the codes on the AP side, but only partially open or even refuse to open the codes on the modem side, and the progress of related development is slow. However, the current URSP rule of 3GPP is equivalent to completely placing a 5G network slice selection policy on the modem side, while the application of the 5G network slice rules is on the AP side. As a result, the distance between them at the logic layers is too far, which makes the customization of scenarios according to requirements of customers very inconvenient and the implementation of many requirements of customers in actual vertical industries very difficult.

"3rd Generation Partnership Project; Technical Specification Group Services and System Aspects; Study on application layer support for Factories of the Future in 5G network; (Release 17)", 3GPP DRAFT; 23745-090, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE , 4 August 2020 (2020-08-04), XP051934719, relates to the application architecture aspects to support Factories of the Future in 5G network, and corresponding architectural solutions. The study includes identifying architecture requirements that are necessary to ensure efficient use and deployment of application layer support for Factories of the Future in 5G network.

"3rd Generation Partnership Project; Technical Specification Group Services and System Aspects; Service Enabler Architecture Layer for Verticals (SEAL); Functional architecture and information flows; (Release 17)", 3GPP STANDARD; TECHNICAL SPECIFICATION; 3GPP TS 23.434, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, no. V17.2.0 25 June 2021 (2021-06-25), pages 1-165, XP052029805, relates to the functional architecture for service enabler architecture layer (SEAL) and the procedures, information flows and APIs for each service within SEAL in order to support vertical applications over the 3GPP system. The document is applicable to vertical applications using E-UTRAN or NR access based on the EPC or 5GS architecture defined in 3GPP TS 23.401 [9] and 3GPP TS 23.501 [10]. To ensure efficient use and deployment of vertical applications over 3GPP systems this specification for SEAL services includes the group management, configuration management, location management, identity management, key management and network resource management.

US 2020/045586 A1 relates to a device which can receive, at a radio access network (RAN) and from a user device, first information to initiate a communications session that has one or more properties. The device can send second information to an access and mobility management function component (AMF) to authenticate the user device. The device can send third information to a user plane function component (UPF) to determine a set of network slice policies for managing the communications session. The device can receive the set of network slice policies and apply the set of network slice policies to the communications session. The device can detect a change in the one or more properties of the communications session and send a signal to the UPF to analyze the communications session. The device can receive a new set of network slice policies and apply the new set of network slice policies to the communications session.

"3rd Generation Partnership Project; Technical Specification Group Services and System Aspects; Service Enabler Architecture Layer for Verticals (SEAL); Functional architecture and information flows; (Release 16)", 3GPP STANDARD; TECHNICAL SPECIFICATION; 3GPP TS 23.434, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.4.0 6 July 2020 (2020-07-06), pages 1-120, XP051924153, relates to a functional architecture for service enabler architecture layer (SEAL) over 3GPP networks to support vertical applications (e.g. V2X applications). This functional architecture will include common application plane and signalling plane entities. A set of common services (e.g. group management, configuration management, location management) specified in this document can be shared across vertical applications.

### SUMMARY

The invention is set out in the appended set of claims.

### BRIEF DESCRIPTION OF DRAWINGS

The accompanying drawings are intended to provide a further understanding of the technical scheme of the present disclosure and constitute part of the description. The accompanying drawings are used together with the embodiments of the present disclosure to illustrate the technical scheme of the present disclosure, and do not constitute a limitation to the technical scheme of the present disclosure.
FIG. 1A is a flowchart of a network slice management method according to an embodiment of the present disclosure;
FIG. 1B is a schematic diagram of a network architecture according to an embodiment of the present disclosure;
FIG. 1C is a flowchart of a network slice management method according to another embodiment of the present disclosure;
FIG. 1D is a flowchart of a network slice management method according to another embodiment of the present disclosure;
FIG. 2 is a flowchart of a network slice management method according to an embodiment of the present disclosure; and
FIG. 3 is a schematic structural diagram of a network slice management system according to an embodiment of the present disclosure.

### DETAILED DESCRIPTION

In order to make the objective, technical scheme and advantages of the present disclosure clear, the present disclosure will be further described in detail below with reference to the accompanying drawings and embodiments. It should be understood that the specific embodiments described herein are merely used to illustrate the present disclosure, and are not intended to limit the present disclosure.

It should be understood that in the description of the embodiments of the present disclosure, the term "plurality of" (or multiple) means at least two, the prefix such as "greater than", "less than", "exceed" or variants thereof before a number or series of numbers is understood to exclude this number. If used herein, the terms such as "first" and "second" are merely used for distinguishing technical features, and are not intended to indicate or imply relative importance, or implicitly point out the number of the indicated technical features, or implicitly point out a precedence order of the indicated technical features.

As a basis for 5G applications, the 5G slicing technology is receiving more and more attention from all links in the industrial chain. The 5G slicing technology is a platform technology for the implementation of 5G applications, so it is easy to foresee that in the future, 5G slicing will become the most valued link in the 5G-related industrial chain as well as a focus of competition among various vendors.

In some cases, the network slicing function defined in the current 3rd Generation Partnership Project (3GPP) protocol system is based on the upgrade of a core network to 5G Core Network (5GC), with a UE Route Selection Policy (URSP) being issued to User Equipments (UEs) by a Policy Control Function (PCF) which is a network element of a control plane of the core network. Therefore, the 3GPP Non-Access Stratum (NAS) layer protocol is adopted as a management and update rule for its network slice rules, that is, all the network slice rules are based on the NAS layer protocol, which makes changes related to upgrade and maintenance complicated and inflexible.

The UE is divided into two aspects at software and hardware logic layers, i.e., an Application Process (AP) and a modem. Chip vendors generally open all the codes on the AP side, but only partially open or even refuse to open the codes on the modem side, and the progress of related development is slow. However, the current URSP rule of 3GPP is equivalent to completely placing a 5G network slice selection policy on the modem side, while the application of the 5G network slice rules is on the AP side. As a result, the distance between them at the logic layers is too far, which makes the customization of scenarios according to requirements of customers very inconvenient and the implementation of many requirements of customers in actual vertical industries very difficult.

Embodiments of the present disclosure provide a network slice management method, a network slice management system, and a computer-readable storage medium. By adding a slice management server on a user plane of a core network, the slice management server establishes a connection with a User Equipment (UE), and sends a new version of network slice rule to the UE. Based on this, compared with an existing core network architecture of 3GPP, by adding the slice management server on the user plane of the core network, and using the slice management server to control the network slice rule of the UE, a 5G slicing management function can be carried out by the user plane, and thus a 5G slice selection policy can be placed on the AP side, to facilitate a quick coordination between a terminal vendor, an operator and a customer for quick completion of requirement customization of a 5G vertical industry.

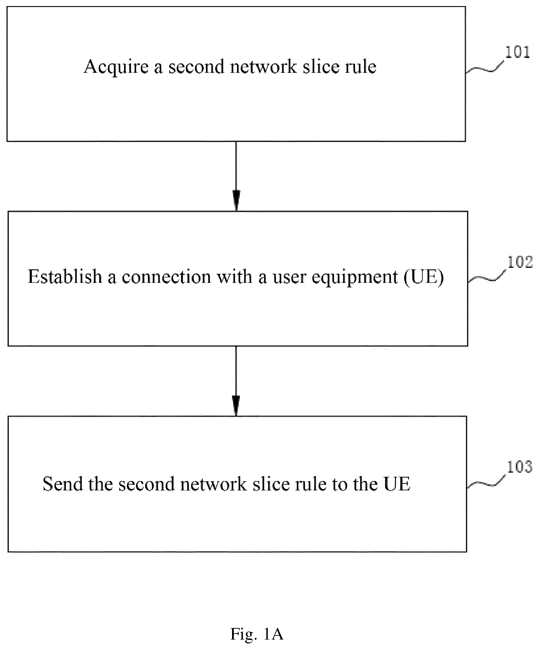

FIG. 1A is a flowchart of a network slice management method according to an embodiment of the present disclosure. As shown in FIG. 1A, the network slice management method is applied to a slice management server, which is arranged on a user plane of a core network. The network slice management method includes, but not limited to, the following steps S101 to S103.

At S101, a second network slice rule is acquired.

At S102, a connection is established with a user equipment (UE).

At S103, the second network slice rule is sent to the UE.

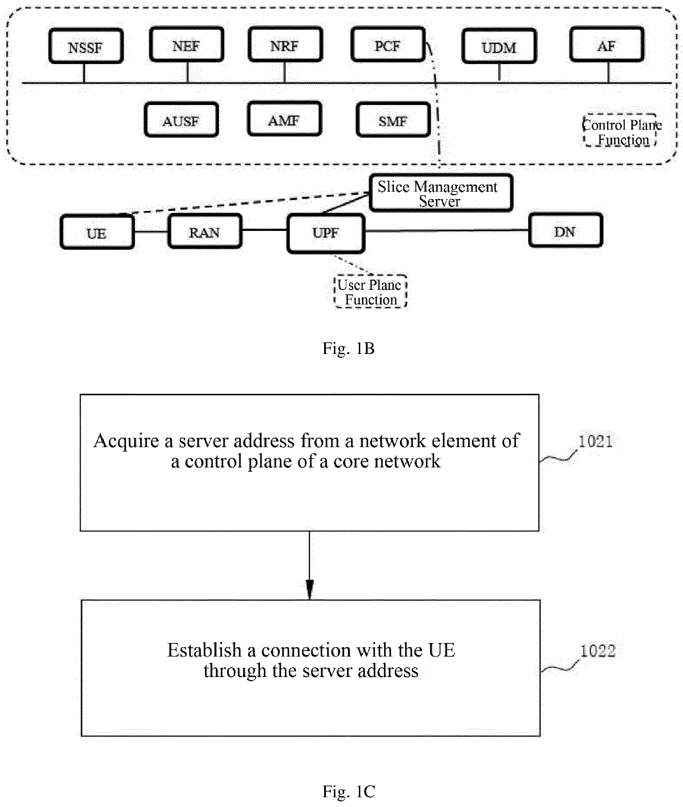

In an embodiment, the slice management server acquires a second network slice rule, establishes a connection with a User Equipment (UE), and sends the second network slice rule to the UE. The second network slice rule refers to a new version of network slice rule acquired by the slice management server. In this embodiment, as shown in FIG. 1B, the slice management server may be separately arranged on the user plane of the core network, or may be integrated in a network element of the user plane, e.g., a User Plane Function (UPF). Based on this, compared with an existing core network architecture of 3GPP, by adding the slice management server on the user plane of the core network, and using the slice management server to control the network slice rule of the UE, a 5G slicing management function can be carried out by the user plane, and thus a 5G slice selection policy can be placed on the AP side, to facilitate a quick coordination between a terminal vendor, an operator and a customer for quick completion of requirement customization of a 5G vertical industry.

In an embodiment, the slice management server may issue the network slice rule to the UE actively or according to a request of the UE.

It should be pointed out that, for the management of the network slice rule of the UE, the slice management server may independently manage the network slice rule of the UE, or may cooperate with a Policy Control Function (PCF) located on the control plane of the core network to manage the network slice rule.

In an embodiment, as shown in FIG. 1C, S102 may include, but not limited to, the following sub-steps S1021 to 1022.

At S1021, a server address is acquired from a network element on the control plane of the core network.

At S1022, a connection is established with the UE through the server address.

In this embodiment, the slice management server acquires the server address from a network element on the control plane of the core network, and the UE establishes a connection with the slice management server through the server address, so that the connection between the slice management server and the UE is established. The network element of the core control plane includes, but not limited to, the PCF. It should be pointed out that the server address may be an IP address or a domain name.

In an embodiment, S103 may include, but not limited to, the following sub-step:
sending the second network slice rule to the UE according to a first network slice rule matching request sent by the UE.

In this embodiment, the UE sends a request to the slice management server, which is the first network slice rule matching request for checking the version of a first network slice rule. The first network slice rule is a network slice rule built in the UE. The slice management server sends the second network slice rule to the UE according to a check result of the request.

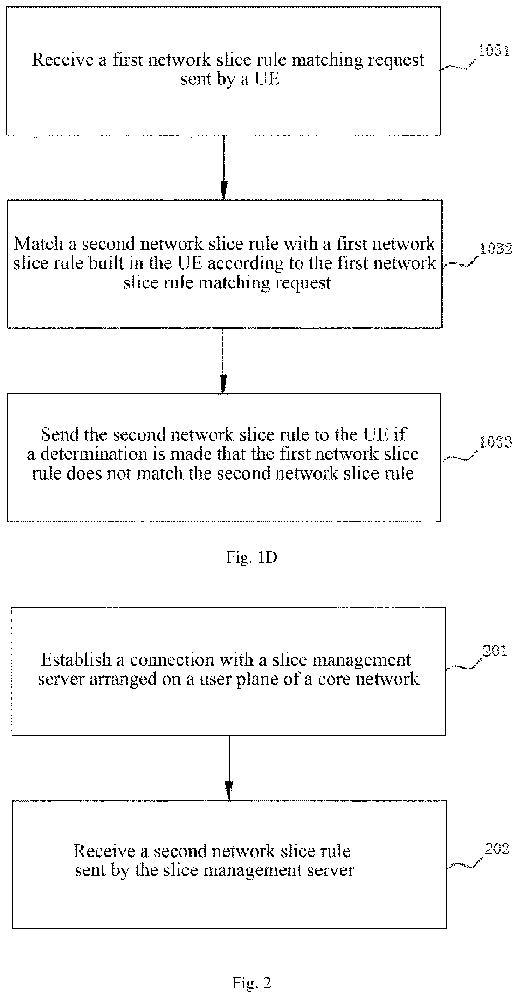

In an embodiment, as shown in FIG. 1D, S103 may further include, but not limited to, the following sub-steps S1031 to S1033.

At S1031, the first network slice rule matching request sent by the UE is received.

At S1032, matching the second network slice rule with the first network slice rule built in the UE is performed according to the first network slice rule matching request.

At S1033, if a determination is made that the first network slice rule does not match the second network slice rule, the second network slice rule is sent to the UE.

In this embodiment, the slice management server receives the request sent by the UE, which is the first network slice rule matching request for checking the version of the first network slice rule. The first network slice rule is a network slice rule built in the UE. The slice management server matches, according to the first network slice rule matching request, the second network slice rule with the first network slice rule built in the UE. If a determination is made that the first network slice rule does not match the second network slice rule, that is, it is judged that a current network slice rule built in the UE is not desired by the network, the second network slice rule is sent to the UE to replace the first network slice rule built in the UE.

FIG. 2 is a flowchart of a network slice management method according to an embodiment of the present disclosure. As shown in FIG. 2, the network slice management method is applied to a User Equipment (UE). The method includes, but not limited to, the following steps S201 to S202.

At S201, a connection is established with a slice management server arranged on a user plane of a core network.

At S202, a second network slice rule sent by the slice management server is received.

In an embodiment, the UE establishes a connection with the slice management server arranged on the user plane of the core network, and receives the second network slice rule sent by the slice management server. The second network slice rule refers to a new version of network slice rule acquired by the slice management server. In this embodiment, the UE acquires the second network slice rule from the slice management server, and the slice management server is arranged on the user plane of the core network. Therefore, compared with the current core network architecture of 3GPP, the slice management server is used to control the network slice rule of the UE, so that a 5G slicing management function can be carried out by the user plane, and thus a 5G slice selection policy can be placed on the AP side, to facilitate a quick coordination between a terminal vendor, an operator and a customer for quick completion of requirement customization of a 5G vertical industry.

In an embodiment, the method further includes the following step:
when a connection is established with the slice management server arranged on the user plane of the core network, sending a first network slice rule matching request to the slice management server, so that the slice management server sends the second network slice rule to the UE according to the first network slice rule matching request.

In this embodiment, when a connection is established with the slice management server arranged on the user plane of the core network, the UE actively sends a request to the slice management server, which is the first network slice rule matching request for checking the version of a first network slice rule, so that the slice management server sends the second network slice rule to the UE according to the first network slice rule matching request. The first network slice rule is a network slice rule built in the UE.

In an embodiment, the method further includes the following step:
when the second network slice rule sent by the slice management server is received, replacing the first network slice rule built in the UE with the second network slice rule.

In this embodiment, the slice management server matches, according to the first network slice rule matching request, the second network slice rule with the first network slice rule built in the UE. If a determination is made that the first network slice rule does not match the second network slice rule, that is, it is judged that a current network slice rule built in the UE is not desired by the network, the second network slice rule sent by the slice management server is received and used to replace the first network slice rule built in the UE to complete the update of the network slice rule. Thus, when the UE initiates a service connection, a network slice will be selected according to the updated network slice rule to complete the related service connection.

In an embodiment, the method further includes the following step:
encrypting and saving the second network slice rule.

In this embodiment, after the network slice rule is updated, the UE may encrypt and save the updated network slice rule. The UE is not allowed to modify the network slice rule, which can only be modified by the network slice server.

In an embodiment, S201 may further include, but not limited to, the following sub-steps:
acquiring a server address of the slice management server; and
establish a connection with the slice management server through the server address.

In this embodiment, the UE acquires the server address of the slice management server and establishes a connection with the slice management server through the server address, so that the connection between the slice management server and the UE is established. It should be pointed out that the server address may be an IP address or a domain name.

The network slice management method according to the embodiments of the present disclosure will be further illustrated below by taking the slice management server independently controlling the network slicing function of the UE as an example. The method includes the following steps S1 to S8.

At S1, a default network slice built in the UE is used for initiating boot registration.

At S2, a link between a wireless network and a core network is established.

At S3, a PCF issues an IP address of a slice management server.

At S4, an IP connection is established between the slice management server and the UE.

At S5, the slice management server actively issues a network slice rule to the UE, or the UE applies for a check of the content (or version) of a network slice rule, and the slice management server judges, according to a check result, whether to issue a new network slice rule.

At S6, if a current network slice rule of the UE is inconsistent with the network slice rule of the slice management server, the network slice server issues the network slice rule to the UE.

At S7, after update of the network slice rule is complete, the UE encrypts and saves the slice rule, where the UE is not allowed to modify the network slice rule, which can only be modified by the network slice server.

At S8, when the UE initiates a service connection, a network slice is selected according to the network slice rule to complete the related service connection.

Based on this, compared with an existing core network architecture of 3GPP, by adding the slice management server on the user plane of the core network, and using the slice management server to control the network slice rule of the UE, a 5G slicing management function can be carried out by the user plane, and thus a 5G slice selection policy can be placed on the AP side, to facilitate a quick coordination between a terminal vendor, an operator and a customer for quick completion of requirement customization of a 5G vertical industry.

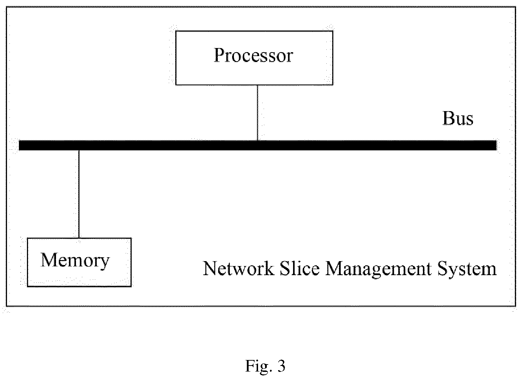

As shown in FIG. 3, an embodiment of the present disclosure further provides a network slice management system.

In an embodiment, the network slice management system includes one or more processors, and a memory. In FIG. 3, one processor and a memory are taken as an example. The processor and the memory may be connected through a bus or other means. In FIG. 3, bus connection is taken as an example.

As a non-transitory computer-readable storage medium, the memory may be configured to store a non-transitory software program and a non-transitory computer-executable program, such as the above network slice management method in the embodiments of the present disclosure. The non-transitory software program and the non-transitory computer-executable program stored in the memory, when executed by the processor, cause the processor to implement the above network slice management method in the embodiments of the present disclosure.

The memory may include a program storage area and a data storage area. The storage program area may store an operating system and an application required by at least one function. The data storage area may store data and the like required for executing the above network slice management methods in the embodiments of the present disclosure. In addition, the memory may include a high-speed random access memory, and may also include a non-transitory memory, e.g. at least one disk storage device, flash memory device or other non-transitory solid-state storage devices. In some embodiments, the memory may include memories disposed remotely relative to the processor, and these remote memories may be connected to the terminal device through a network. Examples of the above network include, but not limited to, the Internet, an intranet, a local area network, a mobile communication network, and combinations thereof.

The non-transitory software program and the non-transitory computer-executable program required for implementing the above network slice management methods in the embodiments of the present disclosure are stored in the memory which, when executed by one or more processors, cause the one or more processors to implement the above network slice management methods in the embodiments of the present disclosure is executed, for example, the steps S101 to S103 in FIG. 1A, the steps S1021 to S1022 in FIG. 1C, the steps S1031 to S1033 in FIG. 1D and the steps S201 to S202 in FIG. 2. By establishing a connection between the slice management server arranged on the user plane of the core network and the UE, the slice management server sends a new version of network slice rule to the UE. Based on this, compared with an existing core network architecture of 3GPP, by adding the slice management server on the user plane of the core network, and using the slice management server to control the network slice rule of the UE, a 5G slicing management function can be carried out by the user plane, and thus a 5G slice selection policy can be placed on the AP side, to facilitate a quick coordination between a terminal vendor, an operator and a customer for quick completion of requirement customization of a 5G vertical industry.

In addition, an embodiment of the present disclosure further provides a computer-readable storage medium, storing a computer-executable program which, when executed by one or more control processors (e.g., one processor in FIG. 3), causes the one or more processors to implement the above network slice management methods in the embodiments of the present disclosure, for example, the steps S101 to S103 in FIG. 1A, the steps S1021 and S1022 in FIG. 1C, the steps S1031 to S1033 in FIG. 1D and the steps S201 and S202 in FIG. 2 described above. By establishing a connection between the slice management server arranged on the user plane of the core network and the UE, the slice management server sends a new version of network slice rule to the User Equipment (UE). Based on this, compared with an existing core network architecture of 3GPP, by adding the slice management server on the user plane of the core network, and using the slice management server to control the network slice rule of the UE, a 5G slicing management function can be carried out by the user plane, and thus a 5G slice selection policy can be placed on the AP side, to facilitate a quick coordination between a terminal vendor, an operator and a customer for quick completion of requirement customization of a 5G vertical industry.

According to the embodiments of the present disclosure, by adding a slice management server on a user plane of a core network, the slice management server establishes a connection with a User Equipment (UE), and the slice management server sends a new version of network slice rule to the UE. Based on this, compared with an existing core network architecture of 3GPP, by adding the slice management server on the user plane of the core network, and using the slice management server to control the network slice rule of the UE, a 5G slicing management function can be carried out by the user plane, and thus a 5G slice selection policy can be placed on the AP side, to facilitate a quick coordination between a terminal vendor, an operator and a customer for quick completion of requirement customization of a 5G vertical industry.

It can be understood by those having ordinary skills in the art that all or some of the steps in the method and the system disclosed above can be implemented as software, firmware, hardware and an appropriate combination thereof. Some or all of the physical components may be implemented as software executed by a processor (such as a central processing unit, a digital signal processor or a microprocessor), hardware or an integrated circuit (such as an application-specific integrated circuit). Such software may be distributed on computer-readable media, which may include computer storage media (or non-transitory media) and communication media (or transitory media). As is well-known to those having ordinary skills in the art, the term "computer storage media" include volatile and nonvolatile, removable and non-removable media implemented in any method or technology for storing information (such as computer-readable programs, data structures, program modules or other data). Computer storage media include, but not limited to, RAMs, ROMs, EEPROMs, flash memories or other memory technologies, CD-ROMs, digital versatile disks (DVDs) or other optical disk storages, magnetic cassettes, magnetic tapes, magnetic disk storages or other magnetic storage devices or any other media that can be used to store desired information and can be accessed by computers. Further, it is well-known to those having ordinary skills in the art that communication media typically contain computer-readable programs, data structures, program modules or other data in a modulated data signal such as carriers or other transmission mechanisms, and may include any information delivery media.

## Claims

1. A network slice management method, applied to a slice management server arranged on a user plane of a core network, the method comprising:
acquiring a second network slice rule (101), wherein the second network slice rule refers to a new version of network slice rule acquired by the slice management server, and the network slice rule is a UE Route Selection Policy, URSP, rule;
acquiring a server address of the slice management server from a network element of a control plane of the core network (1021);
establishing a connection with a UE using the server address (1022); and
sending the second network slice rule to the UE (103).

2. The method of claim 1, wherein the network element of the control plane of the core network is a policy control function, PCF.

3. The method of claim 1, wherein the server address is an IP address or a domain name.

4. The method of claim 1, wherein sending the second network slice rule to the UE (103) comprises:
sending the second network slice rule to the UE according to a first network slice rule matching request sent by the UE.

5. The method of claim 4, wherein sending the second network slice rule to the UE according to a first network slice rule matching request sent by the UE comprises:
receiving the first network slice rule matching request sent by the UE (1031);
matching the second network slice rule with the first network slice rule built in the UE according to the first network slice rule matching request (1032); and
in response to a determination that the first network slice rule does not match the second network slice rule, sending the second network slice rule to the UE (1033).

6. A network slice management method, which is applied to a user equipment, UE, the method comprising:
establishing a connection with a slice management server arranged on a user plane of a core network (201) through a server address of the slice management server, wherein the server address of the slice management server is acquired by the slice management server from a network element of a control plane of the core network; and
receiving a second network slice rule sent by the slice management server (202), wherein the second network slice rule refers to a new version of network slice rule acquired by the slice management server, and the network slice rule is a UE Route Selection Policy, URSP, rule.

7. The method of claim 6, further comprising:
in response to a connection being established with the slice management server arranged on the user plane of the core network, sending a first network slice rule matching request to the slice management server, so that the slice management server sends the second network slice rule to the UE according to the first network slice rule matching request.

8. The method of claim 7, further comprising:
in response to receiving the second network slice rule sent by the slice management server, replacing the first network slice rule built in the UE with the second network slice rule.

9. The method of claim 8, further comprising:
encrypting and saving the second network slice rule.

10. The method of claim 6, wherein establishing a connection with a slice management server arranged on a user plane of a core network (201) comprises:
acquiring a server address of the slice management server; and
establishing a connection with the slice management server using the server address.

11. The method of claim 10, wherein the server address is an IP address or a domain name.

12. A network slice management server, comprising a memory, a processor, and a computer program stored in the memory and executable by the processor which, when executed by the processor, causes the processor to perform the network slice management method of any of claims 1 to 5.

13. A user equipment, UE, comprising a memory, a processor, and a computer program stored in the memory and executable by the processor which, when executed by the processor, causes the processor to perform the network slice management method of any of claims 6 to 11.

14. A computer-readable storage medium, storing a computer-executable program which, when executed by a computer, causes the computer to perform the network slice management method of any of claims 1 to 5.

## Patentansprüche

1. Netzwerk-Slice-Verwaltungsverfahren, das auf einen Slice-Verwaltungsserver angewendet wird, der auf einer Benutzerebene eines Kernnetzwerks angeordnet ist, das Verfahren umfassend:
Erwerben einer zweiten Netzwerk-Slice-Regel (101), wobei sich die zweite Netzwerk-Slice-Regel auf eine neue Version der durch den Slice-Verwaltungsserver erworbenen Netzwerk-Slice-Regel bezieht, und die Netzwerk-Slice-Regel eine UE-Routenauswahlrichtlinien-, URSP-, Regel ist;
Erwerben einer Serveradresse des Slice-Verwaltungsservers von einem Netzwerkelement einer Steuerebene des Kernnetzwerks (1021);
Etablieren einer Verbindung mit einem UE unter Verwendung der Serveradresse (1022); und
Senden der zweiten Netzwerk-Slice-Regel an das UE (103).

2. Verfahren nach Anspruch 1, wobei das Netzwerkelement der Steuerebene des Kernnetzwerks eine Richtliniensteuerfunktion, PCF, ist.

3. Verfahren nach Anspruch 1, wobei die Serveradresse eine IP-Adresse oder ein Domänenname ist.

4. Verfahren nach Anspruch 1, wobei das Senden der zweiten Netzwerk-Slice-Regel an das UE (103) umfasst:
Senden der zweiten Netzwerk-Slice-Regel an das UE gemäß einer ersten Netzwerk-Slice-Regelabgleichsanforderung, die durch das UE gesendet wurde.

5. Verfahren nach Anspruch 4, wobei das Senden der zweiten Netzwerk-Slice-Regel an das UE gemäß einer ersten Netzwerk-Slice-Regelabgleichsanforderung, die durch das UE gesendet wurde, umfasst:
Empfangen der ersten Netzwerk-Slice-Regelabgleichsanforderung, die durch das UE gesendet wurde (1031);
Abgleichen der zweiten Netzwerk-Slice-Regel mit der ersten Netzwerk-Slice-Regel, die in dem UE integriert ist, gemäß der ersten Netzwerk-Slice-Regelabgleichsanforderung (1032); und
als Reaktion auf eine Bestimmung, dass die erste Netzwerk-Slice-Regel nicht mit der zweiten Netzwerk-Slice-Regel übereinstimmt, Senden der zweiten Netzwerk-Slice-Regel an das UE (1033).

6. Netzwerk-Slice-Verwaltungsverfahren, das auf ein Benutzergerät, UE, angewendet wird, das Verfahren umfassend:
Etablieren einer Verbindung mit einem Slice-Verwaltungsserver, der auf einer Benutzerebene eines Kernnetzwerks (201) angeordnet ist, durch eine Serveradresse des Slice-Verwaltungsservers, wobei die Serveradresse des Slice-Verwaltungsservers durch den Slice-Verwaltungsserver von einem Netzwerkelement einer Steuerebene des Kernnetzwerks erworben wird; und
Empfangen einer zweiten Netzwerk-Slice-Regel, die durch den Slice-Verwaltungsserver gesendet wurde (202), wobei sich die zweite Netzwerk-Slice-Regel auf eine neue Version der durch den Slice-Verwaltungsserver erworbenen Netzwerk-Slice-Regel bezieht, und die Netzwerk-Slice-Regel eine UE-Routenauswahlrichtlinien-, URSP-, Regel ist.

7. Verfahren nach Anspruch 6, ferner umfassend:
als Reaktion darauf, dass eine Verbindung mit dem Slice-Verwaltungsserver etabliert wird, der auf der Benutzerebene des Kernnetzwerks angeordnet ist, Senden einer ersten Netzwerk-Slice-Regelabgleichsanforderung an den Slice-Verwaltungsserver, so dass der Slice-Verwaltungsserver die zweite Netzwerk-Slice-Regel an das UE gemäß der ersten Netzwerk-Slice-Regelabgleichsanforderung sendet.

8. Verfahren nach Anspruch 7, ferner umfassend:
als Reaktion auf das Empfangen der zweiten Netzwerk-Slice-Regel, die durch den Slice-Verwaltungsserver gesendet wurde, Ersetzen der ersten Netzwerk-Slice-Regel, die in dem UE integriert ist, durch die zweite Netzwerk-Slice-Regel.

9. Verfahren nach Anspruch 8, ferner umfassend:
Verschlüsseln und Speichern der zweiten Netzwerk-Slice-Regel.

10. Verfahren nach Anspruch 6, wobei das Etablieren einer Verbindung mit einem Slice-Verwaltungsserver, der auf einer Benutzerebene eines Kernnetzwerks (201) angeordnet ist, umfasst:
Erwerben einer Serveradresse des Slice-Verwaltungsservers; und
Etablieren einer Verbindung mit dem Slice-Verwaltungsserver unter Verwendung der Serveradresse.

11. Verfahren nach Anspruch 10, wobei die Serveradresse eine IP-Adresse oder ein Domänenname ist.

12. Netzwerk-Slice-Verwaltungsserver, umfassend einen Speicher, einen Prozessor und ein Computerprogramm, das in dem Speicher gespeichert ist und durch den Prozessor ausführbar ist, das, wenn es durch den Prozessor ausgeführt wird, den Prozessor veranlasst, das Netzwerk-Slice-Verwaltungsverfahren nach einem der Ansprüche 1 bis 5 durchzuführen.

13. Benutzergerät, UE, umfassend einen Speicher, einen Prozessor und ein Computerprogramm, das in dem Speicher gespeichert ist und durch den Prozessor ausführbar ist, das, wenn es durch den Prozessor ausgeführt wird, den Prozessor veranlasst, das Netzwerk-Slice-Verwaltungsverfahren nach einem der Ansprüche 6 bis 11 durchzuführen.

14. Computerlesbares Speichermedium, das ein computerausführbares Programm speichert, das, wenn es durch einen Computer ausgeführt wird, den Computer veranlasst, das Netzwerk-Slice-Verwaltungsverfahren nach einem der Ansprüche 1 bis 5 durchzuführen.

## Revendications

1. Procédé de gestion de tranches de réseau, appliqué à un serveur de gestion de tranches situé dans le plan utilisateur d'un réseau cœur, le procédé comprenant les étapes suivantes :
acquérir une deuxième règle de tranche de réseau (101), la deuxième règle de tranche de réseau faisant référence à une nouvelle version de règle de tranche de réseau acquise par le serveur de gestion de tranches, et la règle de tranche de réseau étant une règle de politique de sélection de route UE, URSP ;
acquérir une adresse de serveur du serveur de gestion de tranches depuis un élément de réseau d'un plan de contrôle du réseau cœur (1021) ;
établir une connexion avec un UE en utilisant l'adresse de serveur (1022) ; et
envoyer la deuxième règle de tranche de réseau à l'UE (103).

2. Procédé selon la revendication 1, dans lequel l'élément de réseau du plan de commande du réseau cœur est une fonction de commande de politique, PCF.

3. Procédé selon la revendication 1, dans lequel l'adresse de serveur est une adresse IP ou un nom de domaine.

4. Procédé selon la revendication 1, dans lequel l'envoi de la deuxième règle de tranche de réseau à l'UE (103) comprend l'étape suivante :
envoyer la deuxième règle de tranche de réseau à l'UE en fonction d'une première demande de mise en correspondance de règle de tranche de réseau envoyée par l'UE.

5. Procédé selon la revendication 4, dans lequel l'envoi de la deuxième règle de tranche de réseau à l'UE conformément à une première demande de mise en correspondance de règle de tranche de réseau envoyée par l'UE comprend les étapes suivantes :
recevoir la première demande de mise en correspondance de règle de tranche de réseau envoyée par l'UE (1031) ;
mettre en correspondance la deuxième règle de tranche de réseau avec la première règle de tranche de réseau construite dans l'UE en fonction de la première demande de mise en correspondance de règle de tranche de réseau (1032) ; et
en réponse à une détermination selon laquelle la première règle de tranche de réseau ne correspond pas à la deuxième règle de tranche de réseau, envoyer la deuxième règle de tranche de réseau à l'UE (1033).

6. Procédé de gestion de tranche de réseau, appliqué à un équipement utilisateur, UE, le procédé comprenant les étapes suivantes :
établir une connexion avec un serveur de gestion de tranches disposé dans un plan utilisateur d'un réseau cœur (201) par l'intermédiaire d'une adresse de serveur du serveur de gestion de tranches, l'adresse de serveur du serveur de gestion de tranches étant acquise par le serveur de gestion de tranches à partir d'un élément de réseau d'un plan de commande du réseau cœur ; et
recevoir une deuxième règle de tranche de réseau envoyée par le serveur de gestion de tranches (202), la deuxième règle de tranche de réseau faisant référence à une nouvelle version de règle de tranche de réseau acquise par le serveur de gestion de tranches, et la règle de tranche de réseau étant une règle de politique de sélection de route UE, URSP.

7. Procédé selon la revendication 6, comprenant en outre l'étape suivante :
en réponse à une connexion établie avec le serveur de gestion de tranches disposé dans le plan utilisateur du réseau cœur, envoyer une première demande de mise en correspondance de règle de tranche de réseau au serveur de gestion de tranches, de sorte que le serveur de gestion de tranches envoie la deuxième règle de tranche de réseau à l'UE en fonction de la première demande de mise en correspondance de règle de tranche de réseau.

8. Procédé selon la revendication 7, comprenant en outre l'étape suivante :
en réponse à la réception de la deuxième règle de tranche de réseau envoyée par le serveur de gestion de tranches, remplacer la première règle de tranche de réseau construite dans l'UE par la deuxième règle de tranche de réseau.

9. Procédé selon la revendication 8, comprenant en outre les étapes suivantes :
chiffrer et enregistrer la deuxième règle de tranche de réseau.

10. Procédé selon la revendication 6, dans lequel l'établissement d'une connexion avec un serveur de gestion de tranches agencé dans un plan utilisateur d'un réseau cœur (201) comprend les étapes suivantes :
acquérir une adresse de serveur du serveur de gestion de tranches ; et
établir une connexion avec le serveur de gestion de tranches à l'aide de l'adresse du serveur.

11. Procédé selon la revendication 10, dans lequel l'adresse de serveur est une adresse IP ou un nom de domaine.

12. Serveur de gestion de tranches de réseau, comprenant une mémoire, un processeur et un programme informatique stocké dans la mémoire et exécutable par le processeur qui, lorsqu'il est exécuté par le processeur, amène le processeur à exécuter le procédé de gestion de tranches de réseau selon l'une quelconque des revendications 1 à 5.

13. Équipement utilisateur, UE, comprenant une mémoire, un processeur et un programme informatique stocké dans la mémoire et exécutable par le processeur qui, lorsqu'il est exécuté par le processeur, amène le processeur à exécuter le procédé de gestion de tranches de réseau selon l'une quelconque des revendications 6 à 11.

14. Support de stockage lisible par ordinateur, stockant un programme exécutable par ordinateur qui, lorsqu'il est exécuté par un ordinateur, amène l'ordinateur à exécuter le procédé de gestion de tranches de réseau selon l'une quelconque des revendications 1 à 5.
